# EUROPEAN PATENT SPECIFICATION

(11) **EP 0 805 067 B1**
(45) Date of publication and mention of the grant of the patent: **25.07.2001**
(21) Application number: 97200956.7
(22) Date of filing: 04.04.1997
(51) Int. Cl.: B60P 1/46

(54) **Loading lift for the container of a truck**
Hubladeeinrichtung zur Anwendung an einem Lastwagenbehälter
Dispositif de hayon élévateur pour le conteneur d'un camion

(30) Priority: 23.09.1996 BE 9600800; 05.04.1996 BE 9600289
(43) Date of publication of application: 05.11.1997
(73) Proprietor: NV NUYTS ORB, 2300 Turnhout (BE)
(72) Inventor: Nuyts, Henri, 2300 Turnhout (BE)
(74) Representative: Donné, Eddy

(56) References cited:
- EP-A- 0 699 557
- GB-A- 1 413 182
- NL-A- 6 509 209
- US-A- 3 174 634

## Description

The invention relates to a loading lift for mounting to the container of a truck as described in the preamble of the main claim.

Such a loading lift is known from EP-A-O 699 557. In case of this known device the hoisting mechanism is in the shape of a hydraulic cylinder. This has the difficulty, that the loading platform is only movable over a limited distance.

The object of the invention is to remove this difficulty and to that end the features are provided as indicated in the characterizing portion of the main claim.

By applying such a system of hydraulic cylinders, the height across which the loading platform is movable, can be enhanced considerably. Yet, the complete system remains simple in construction. Whereas the basic pulling cylinder's rod will extend from the housing upwards, the position of the tandem cylinder can be chosen arbitrarily.

In particular the lower end of the housing of the basic pulling cylinder will be provided with a support piece on which the slider or the mounting bracket connected to the slider can come to bear.

When the tandem cylinder has its greatest possible length, the loading platform will bear on the support piece. When the loading platform is in the lowermost position, it will first be brought up by means of the basic pulling cylinder. After the basic pulling cylinder has been completely retracted, the further upward movement of the loading platform will take place by means of the tandem cylinder so that it will not be loaded unnecessarily. Also, the buckling load on the basic pulling cylinder will be kept as small as possible.

To that end, means can be provided, through which the tandem cylinder can only be operated when the basic pulling cylinder is completely retracted.

In order to prevent undesired loads on the basic pulling cylinder by the end of the tandem cylinder coupled to it, it is provided for, that the end of the tandem cylinder is pivotably coupled to the upper end of the basic pulling cilinder housing by means of a connecting piece.

According to a preferred embodiment, the axes of the basic pulling cylinder and of the accompanying tandem cylinder will extend in a vertical plane being square to the plane extending through said two columns or the opening of the container.

Through this, it is achieved that the opening of the container in transverse direction is limited as little as possible by the presence of the hoisting mechanism.

Generally, the loading platform will be pivotably connected to the mounting bracket and be brought into vertical position by means of a hydraulic swivel cylinder. In that case, the axis of the hydraulic swivel cylinder will also be in the plane in which the axes of the basic pulling cylinder and the tandem cylinder extend.

In that case, the hoisting mechanism will be situated between the column and the swivel cylinder by which the loading platform is operated. There, the swivel cylinder will be connected to a mounting bracket connected to the slider, said mounting bracket extending along the basic pulling cylinder and tandem cylinder or enclosing them.

Since the cylinder housing of the basic pulling cylinder must be movable in vertical height, it will preferably be provided for, that its piston rod is provided with a channel extending longitudinal direction for supply and discharge of hydraulic medium to the basic pulling cylinder.

The connection for hydraulic medium can be made at the upper end of the rod, said upper end being situated in a fixed position.

There is also the possibility that hydraulic medium is supplied to the tandem cylinder through the connecting piece by which the tandem cylinder is coupled to the basic pulling cylinder.

Then, in particular the connecting piece will be coupled to the piston rod of the tandem cylinder, and the piston rod will be provided with a channel extending in longitudinal direction.

The invention is further explained by way of embodiments shown in the drawing, in which:
Fig. 1 diagrammatically shows a side view of a loading lift according to the present invention in which the loading flap is in the lowermost position;

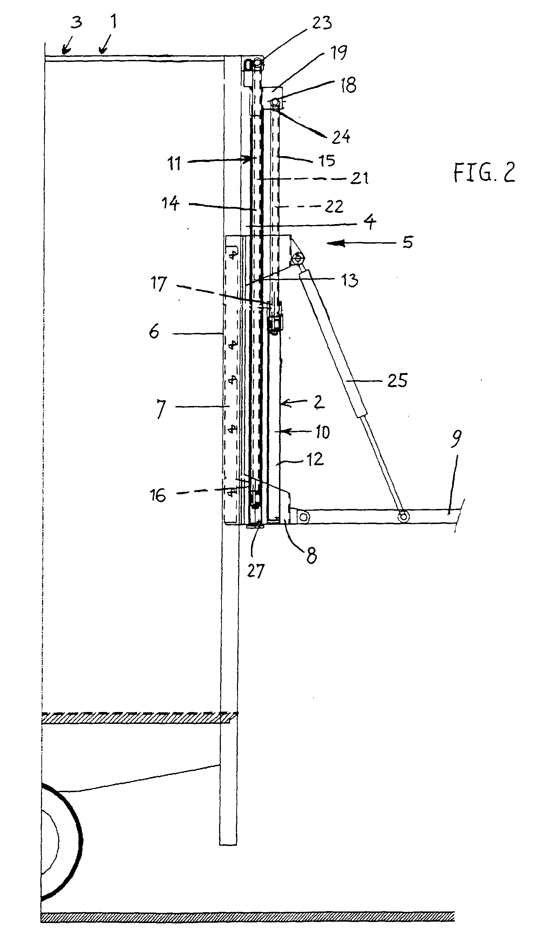

Fig. 2 shows a side view corresponding to Fig. 1, but with the loading flap in the position in which the basic pulling cylinder has reached its retracted position;

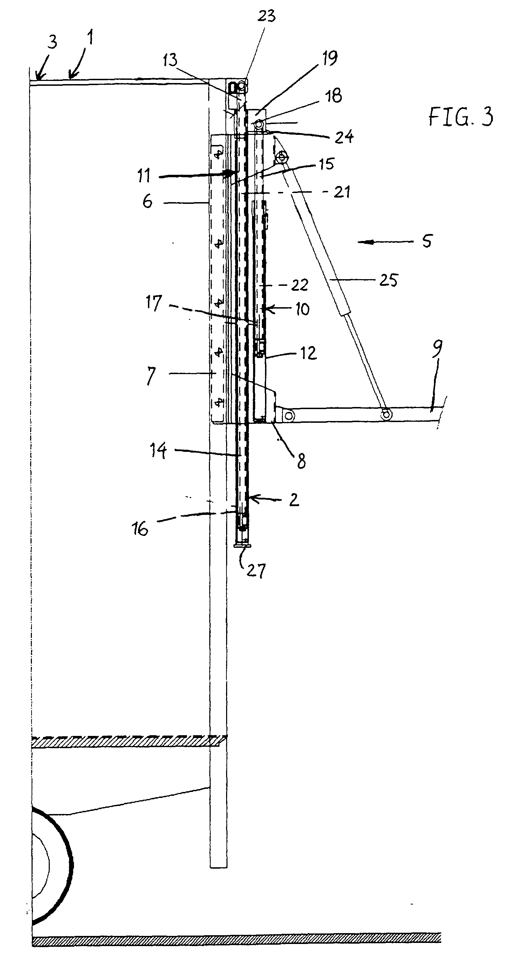

Fig. 3 shows a side view corresponding to Fig. 1, but with the loading flap in its uppermost position;
Fig. 4 diagrammatically shows a plan view of the loading lift according to the Figures 1 - 3.

The drawing shows a truck 1 with a container 3 having its opening 4 provided with a loading lift 5. The loading lift 5 comprises two vertical columns 6 being situated at both sides of the opening 4 of the container 3. There is a slider 7 in each of the columns 6 and each slider 7 is provided with a mounting bracket 8 to which a loading flap 9 is pivotably coupled. The slider 7 is also provided with a connecting bracket 29, a hydraulic pivot cylinder 25 extending between said bracket and the loading flap 9, said cylinder 25 being provided for pivoting the loading flap 9 upwards when it is not in use and the truck must be moved.

For moving the sliders 7 in vertical direction, the hoisting mechanism 2 is provided, which substantially consists of the basic pulling cylinder 11 and the tandem cylinder 10 with their axes being parallel.

Of basic pulling cylinder 11, in point 23, the upper end of the piston rod 13 is coupled to a fixed portion of the column 6, or of the truck 1, or the container 3. This can both be a pivotable and a fixed coupling. The upper end of the cylinder housing 14 is provided with the connecting piece 19 by which the upper end 24 of the piston rod 15 of the tandem cylinder 10 is coupled. The housing 12 of the tandem cylinder 12 is coupled to the mounting bracket 8 of the slider 7. The lower end of the housing 14 of the basic pulling cylinder 11 can be provided with support piece 27, upon which the mounting bracket 8 of the slider 7 can bear.

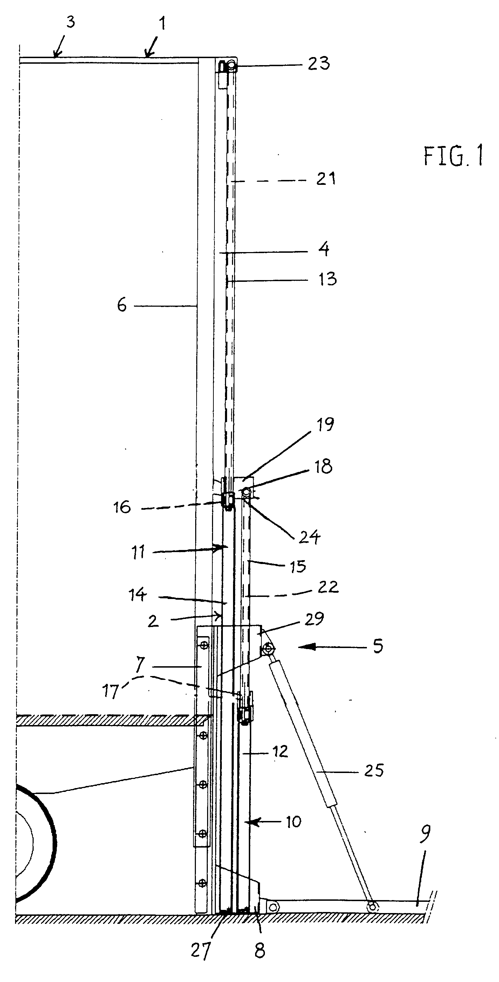

For the supply and discharge of hydraulic medium to a basic pulling cylinder 11, its piston rod 13 contains a channel 21 having its upper end provided with a connection to be connected to a pressurized medium source. Through channel 21, pressurized medium can be supplied to the chamber 16, so that the housing 14 of the basic pulling cylinder 11 can be moved upwards, as seen from the position shown in Fig. 1. It will be obvious, that when said channel 21 is connected to a discharge through said connection, housing 14 will move downward as a consequence of the weight of the parts connected to it. In the same way, a channel 22 can be provided in the piston rod 15 of the tandem cylinder 10. Then, supply and discharge of pressurized medium to the chamber 17 of the tandem cylinder 10 can take place through the connecting piece 19 and a bore 18. On supply of pressurized medium to the chamber 17, the housing 12 will be moved upwards.

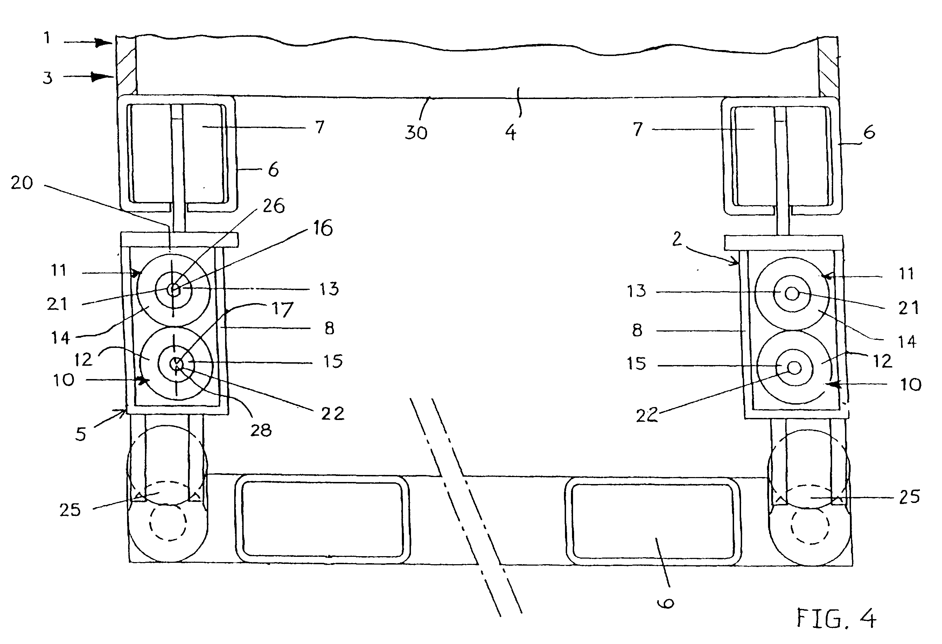

As appears in particular from Fig. 4, the axes 26 and 28 of the basic pulling cylinder 11 and the tandem cylinder 10, respectively, are in one common vertical plane 20 being square to the plane 30 in which the columns 6 and the container opening 4 are situated.

The axis 31 of the swivel cylinder 25 can be substantially in the same plane 30 or slightly outside of it, as appears from Fig. 4 as well.

It will be obvious, that only one possible embodiment of a loading lift according to the invention has been illustrated in the drawing and described above and that many modifications can be made without leaving the inventive idea.

## Claims

1. Loading lift (5) for mounting to the container (3) of a truck (1), said loading lift having at least two columns (6) being mountable in vertical position at both sides of the container opening (4), a slider (7) being movably mounted in each of said columns, said sliders (7) carrying a loading platform (9) through a mounting bracket (8), and at least one of the sliders (7) being either directly connected to a hoisting mechanism (2), or indirectly through said mounting bracket (8), characterized in that the hoisting mechanism (8) comprises two hydraulic cylinders (11, 10) extending parallel, yet spaced apart, in vertical direction, the upper end of the piston rod of the first basic pulling cylinder (11) being coupled to a fixed portion of the loading lift (5) or of the container (3) and the upper end of the cylinder housing (14) being provided with a connecting piece (19) coupled to the upper end (24) of a tandem cylinder (10) having its lower end connected to the slider (7) or to the mounting bracket (8) concerned.

2. Loading lift according to claim 1, characterized in that the lower end of the housing (14) of the basic pulling cylinder (11) is provided with a support piece (27) upon which the slider (7) or the mounting bracket (8) connected to the slider can come to bear.

3. Loading lift according to claim 1 or 2, characterized in that means are provided, through which the tandem cylinder (10) can only be operated when the basic pulling cylinder (11) is completely retracted.

4. Loading lift according to one of the preceding claims, characterized in that the end of the tandem cylinder (10) is pivotably coupled to the upper end of the housing (14) of the basic pulling cilinder (11) by means of a connecting piece (19).

5. Loading lift according to one of the preceding claims, characterized in that the axes (26, 28) of the basic pulling cylinder (11) and of the accompanying tandem cylinder (10), respectively, extend in a vertical plane (20) being square to the plane extending through said two columns (6) or the opening (4) of the container (3).

6. Loading lift according to claim 5, characterized in that the loading platform (9) is pivotably connected to the mounting bracket (8) and is brought into vertical position by means of a hydraulic swivel cylinder (25), the axis of the hydraulic swivel cylinder (25) concerned being in the plane in which the axes (26, 28) of the basic pulling cylinder (11) and the tandem cylinder (10) extend.

7. Loading lift according to one of the preceding claims, characterized in that the piston rod (13) of the basic pulling cylinder (11) is provided with a channel (21) extending in longitudinal direction for supply and discharge of hydraulic medium to the basic pulling cylinder (11).

8. Loading lift according to claim 7, characterized in that the connecting piece (19) of the basic pulling cylinder (11) is coupled to the piston rod (15) of the tandem cylinder (10) and that the piston rod (15) is provided with a channel (22) extending in longitudinal direction.

## Patentansprüche

1. Hubladevorrichtung (5) zur Montage am Behälter (3) eines Lastwagens (1), wobei besagte Hubladevorrichtung zumindest zwei Säulen (6) umfasst, die in vertikaler Position zu beiden Seiten der Behälteröffnung (4) montiert werden können, einen Schlitten (7), der in jeder der besagten Säulen bewegbar montiert ist, wobei besagte Schlitten (7) mittels einer Montagegabel (8) eine Ladeplattform (9) tragen, und wobei zumindest einer der Schlitten (7) entweder direkt mit einem Hubmechanismus (2) verbunden ist, oder indirekt durch besagte Montagegabel (8), dadurch gekennzeichnet, dass der Hubmechanismus (8) zwei Hydraulikzylinder (11, 10) umfasst, die sich parallel, jedoch mit einem Abstand, in vertikaler Richtung erstrecken, wobei das obere Ende der Kolbenstange des ersten Basis-Zugzylinders (11) mit einem festen Bereich der Hubladevorrichtung (5) oder des Behälters (3) gekoppelt ist und das obere Ende des Zylindergehäuses (14) mit einem Verbindungsstück (19) versehen ist, das mit dem oberen Ende (24) eines Tandemzylinders (10) gekoppelt ist, dessen unteres Ende mit dem Schlitten (7) oder der betreffenden Montagegabel (8) verbunden ist.

2. Hubladevorrichtung gemäß Anspruch 1, dadurch gekennzeichnet, dass das untere Ende des Gehäuses (14) des Basis-Zugzylinders (11) mit einem Stützteil (27) versehen ist, worauf der Schlitten (7) oder die mit dem Schlitten verbundene Montagegabel (8) abgestützt sein kann.

3. Hubladevorrichtung gemäß Anspruch 1 oder 2, dadurch gekennzeichnet, dass Mittel vorgesehen sind, wodurch der Tandemzylinder (10) nur bedient werden kann, wenn der Basis-Zugzylinder (11) vollständig zurückgezogen ist.

4. Hubladevorrichtung gemäß einem der vorgenannten Ansprüche, dadurch gekennzeichnet, dass das Ende des Tandemzylinders (10) mittels eines Verbindungsstücks (19) scharnierbar mit dem oberen Ende des Gehäuses (14) des Basis-Zugzylinders (11) verbunden ist.

5. Hubladevorrichtung gemäß einem der vorgenannten Ansprüche, dadurch gekennzeichnet, dass die Achsen (26, 28) des Basis-Zugzylinders (11) beziehungsweise des zugehörigen Tandemzylinders (10) sich in einer vertikalen Ebene (20) erstrecken, die senkrecht zu der Ebene verläuft, die sich durch die besagten beiden Säulen (6) oder die Öffnung (4) des Behälters (3) erstreckt.

6. Hubladevorrichtung gemäß Anspruch 5, dadurch gekennzeichnet, dass die Ladeplattform (9) scharnierbar mit der Montagegabel (8) verbunden ist und mittels eines hydraulischen Schwenkzylinders (25) in vertikale Position gebracht wird, wobei die Achse des betreffenden hydraulischen Schwenkzylinders (25) sich in der Ebene befindet, worin sich die Achsen (26,28) des Basis-Zugzylinders (11) und des Tandemzylinders (10) erstrecken.

7. Hubladevorrichtung gemäß einem der vorgenannten Ansprüche, dadurch gekennzeichnet, dass die Kolbenstange (13) des Basis-Zugzylinders (11) mit einem sich in Längsrichtung erstreckenden Kanal (21) zur Zufuhr und Abfuhr von Hydraulikmedium zum Basis-Zugzylinder (11) versehen ist.

8. Hubladevorrichtung gemäß Anspruch 7, dadurch gekennzeichnet, dass das Verbindungsstück (19) des Basis-Zugzylinders (11) mit der Kolbenstange (15) des Tandemzylinders (10) gekoppelt ist und dass die Kolbenstange (15) mit einem sich in Längsrichtung erstreckenden Kanal (22) versehen ist.

## Revendications

1. Dispositif de hayon élévateur (5) à monter sur le conteneur (3) d'un camion (1), ledit dispositif de hayon élévateur possédant au moins deux montants (6) aptes à être montés en position verticale des deux côtés de l'ouverture (4) du conteneur, un coulisseau (7) étant monté en mobilité dans chacun desdits montants, lesdits coulisseaux (7) supportant une plate-forme de chargement (9) via un support de montage (8), au moins un des coulisseaux (7) étant relié à un mécanisme de levage (2) soit directement, soit indirectement via ledit support de montage (8), caractérisé en ce que le mécanisme de levage (8) comprend deux cylindres hydrauliques (11, 10) s'étendant en parallèle, tout en étant espacés l'un de l'autre, en direction verticale, l'extrémité supérieure de la tige de piston du premier cylindre de traction de base (11) étant couplée à une portion fixe du dispositif de hayon élévateur (5) ou du conteneur (3) et l'extrémité supérieure du logement de cylindre (14) étant munie d'une pièce de liaison (19) couplée à l'extrémité supérieure (24) d'un cylindre tandem (10) dont l'extrémité inférieure est reliée au coulisseau (7) ou au support de montage (8) concerné.

2. Dispositif de hayon élévateur selon la revendication 1, caractérisé en ce que l'extrémité inférieure du logement (14) du cylindre de traction de base (11) est muni d'une pièce de support 27 sur laquelle le coulisseau (7) ou le support de montage (8) relié au coulisseau peut venir s'appuyer.

3. Dispositif de hayon élévateur selon la revendication 1 ou 2, caractérisé en ce que des moyens sont prévus par lesquels le cylindre tandem (10) ne peut être actionné que lorsque le cylindre de traction de base (11) s'est complètement rétracté.

4. Dispositif de hayon élévateur selon l'une quelconque des revendications précédentes, caractérisé en ce que l'extrémité du cylindre tandem (10) est couplée en pivotement à l'extrémité supérieure du logement (14) du cylindre de traction de base (11) à l'aide d'une pièce de liaison (19).

5. Dispositif de hayon élévateur selon l'une quelconque des revendications précédentes, caractérisé en ce que les axes (26, 28) du cylindre de traction de base (11) et du cylindre tandem (10) qui l'accompagne, respectivement, s'étendent dans un plan vertical (20) qui est perpendiculaire au plan passant par lesdits deux montants (6) ou par l'ouverture (4) du conteneur (3).

6. Dispositif de hayon élévateur selon la revendication 5, caractérisé en ce que la plate-forme de chargement (9) est reliée en pivotement au support de montage (8) et est amenée en position verticale à l'aide d'un cylindre de pivotement hydraulique (25), l'axe du cylindre de pivotement hydraulique (25) concerné étant situé dans le plan dans lequel s'étendent les axes (26, 28) du cylindre de traction de base (11) et du cylindre tandem (10).

7. Dispositif de hayon élévateur selon l'une quelconque des revendications précédentes, caractérisé en ce que la tige de piston 13 du cylindre de traction de base (11) est munie d'un canal (21) s'étendant en direction longitudinale pour alimenter ou évacuer un milieu hydraulique dans le cylindre de traction de base (11) et hors de ce dernier.

8. Dispositif de hayon élévateur selon la revendication 7, caractérisé en ce que la pièce de liaison (19) du cylindre de traction de base (11) est couplée à la tige de piston (15) du cylindre tandem (10) et en ce que la tige de piston (15) est munie d'un canal (22) s'étendant en direction longitudinale.
